# EUROPÄISCHE PATENTSCHRIFT

(11) **EP 2 302 005 B1**
(45) Veröffentlichungstag und Bekanntmachung des Hinweises auf die Patenterteilung: **19.09.2012**
(21) Anmeldenummer: 10172862.4
(22) Anmeldetag: 16.08.2010
(51) Int. Cl.: C09D 4/00

(54) **Pigmentierte strahlenvernetzende Lacke**
Pigmented irradiation cross-linking varnishes
Laque à faisceau de rayonnement pigmenté

(30) Priorität: 25.09.2009 DE 102009045026
(43) Veröffentlichungstag der Anmeldung: 30.03.2011
(73) Patentinhaber: Henkel AG & Co. KGaA, 40589 Düsseldorf (DE)
(72) Erfinder: Guilleux, Annabelle, 92600, Asnières-sur-Seine (FR); Tönnießen, Holger, 52382, Niederzier (DE); Darge, Reg, USK Mon NP 15 1AJ (GB)

(56) Entgegenhaltungen:
- EP-A2- 1 193 551
- WO-A1-03/046068
- WO-A1-2007/018421
- WO-A2-03/054030
- US-B1- 6 194 130
- US-B1- 6 352 805
- US-B1- 6 376 160

## Beschreibung

Die Erfindung betrifft strahlenvernetzbare Lacke, die Farbstoffe oder Pigmente enthalten. Die Erfindung betrifft weiterhin einen Mehrschicht-überzug, der aus einem bedruckten Träger, einer antiadhäsiven Schicht und einer undurchsichtigen strahlenvernetzten Lackschicht besteht, wobei die Lackschicht weich ist und durch Reiben von der antiadhäsiven Schicht entfernt werden kann.

Die EP 0974951 beschreibt ein mehrschichtig aufgebautes Etikett zum zeitweisen Verbergen von gedruckten Informationen. Dabei wird eine Information auf einen Träger gedruckt oder aufgebracht, beispielsweise vollständig von einer Klebstoffschicht bedeckt, und auf der Klebstoffschicht mit einer haftenden Folienschicht bedeckt. Auf diese Schichten wird eine abkratzbare Schicht aufgebracht. Eine geeignete Zusammensetzung für Klebstoffschicht oder die abkratzbare Schicht wird nicht gegeben.

Es ist bekannt, dass geeignete abkratzbare Schichten aus sogenannten Rubbellacken hergestellt werden können. Dabei sind diese Rubbellacke lösemittelhaltige Beschichtungsmittel, die beispielsweise deckende Pigmente enthalten wie Ruß oder Metallpigmente. Diese Pigmente erfüllen die Bedingung, dass eine vernetzte Schicht aus dem Beschichtungsmittel lichtdicht ist und auch nicht mit höher energetischer Strahlung durchleuchtet werden kann.

Die Zusammensetzungen haben den Nachteil, dass lösemittelhaltige Lacke bei der Verarbeitung organische, ggf. auch gesundheitsschädliche Lösemittel abgeben. Weiterhin ist eine ausreichende Trockenzeit zum Entfernen der Lösemittel notwendig. Diese Eigenschaften sind für eine schnelle Applikation in großer Stückzahl hinderlich.

Die WO 2005/104065 beschreibt Sicherheitsetiketten, die eine Schutzschicht und eine Klebstoffschicht aufweisen. Dabei ist die Schutzschicht gefärbt und abziehbar, die darunter liegende Klebstoffschicht kann aus UV-vernetzbaren Acrylatklebstoffen hergestellt werden.

Die WO 2006/015659 beschreibt strahlenhärtende Bindemittel, die zusätzlich zu dem Bindemittel noch nahoskalige Pigment enthalten. Insbesondere werden auch Zusammensetzungen beschrieben, die zur Vernetzung mehr als einen Härtungsmechanismus benöfigen. Als Haftvermittler werden zusätzlich Silanverbindungen beschrieben. Diese Beschichtungsmittel sind gut applizierbar und lösemitteifrei, haben jedoch den Nachteil, dass sie keine Blickdichte Abdeckung der darunter liegenden Oberfläche ergeben. Werden in solche Bindemittel Metallpigmente eingebracht, führt das zu katalytischen Reaktionen der Bindemittelbestandteile. Damit sinkt die Lagerstabilität, eine Applikation und anschließende Vernetzung ist dann nicht mehr zu erreichen.

WO 2007/018421 beschreibt Mehrschichtmembranen, wobei einzelne Schichten durch flüssige Zusammensetzungen mit Photointiatoren unter Strahlenhärtung hergestellt werden. Die obere und die untere Schicht oder auch die gesamte Membran sollen bevorzugt frei von Partikeln sein.

WO 2003/054030 beschreibt strahlenhärtende Beschichtungsmittel, die spezielle Copolymere enthalten sollen. Als Copolymere gemäß Anspruch werden Polyvinylalkohol, Polyvinylamidcopolymere beschrieben.

WO 2003/046068 beschreibt ein Verfahren zum Vernetzen von organischen Polymeren. Es werden dabei spezielle Vernetzungsmittel zugegeben. Es werden keine durch optische Strahlung dicht pigmentierten Bindemittel beschrieben, die gleichzeitig über Strahlungvernetzung härten können.

US 6376160 beschreibt ein photographisches Element, enthaltend ein Trägermaterial, darauf eine Silberhalogenid-haltige Schicht, die mit einer Deckschicht enthaltend Wasser, Latexpartikel bestimmte Zusammensetzung beschichtet wird.

Die Deckschicht ist strahlenvernetzbar, sie enthält aber keine Pigmente, insbesondere keine deckenden Pigmente.

US 6352805 beschreibt ebenfalls ein photographisches Element, das ein Trägermaterial umfasst und eine bildgebende Schicht, die mit einer Deckschicht versehen ist. Diese besteht aus einer wässrigen Dispersion, die auch photopolymerisierbare Bestandteile enthält. Spezielle Pigmente, die eine deckende Beschichtung erzeugen werden nicht beschrieben. Diese deckenden Schichten werden auch der beschriebenen Lösung, eine Bildschicht mit einer Überbeschichtung zu versehen, entgegengesetzt, da dann die Bildschicht nich mehr erkennbar wäre.

Die EP 1193551 beschreibt ein Verfahren ein Bildelement herzustellen, wobei auf das Bildelement eine Schutzschicht aufgetragen wird. Die Schutzschicht soll unter anderem durch Strahlung vernetzbar sein. Es wird in D6 eine pigmentierte Beschichtung nicht beschrieben, da eine Schutzschicht für eine Bildschicht erhalten werden soll.

Aufgabe der vorliegenden Erfindung ist es deswegen, ein gut auftragbares und vernetzbares pigmentiertes Beschichtungsmittel zur Verfügung zu stellen, das durch eine Strahlenvernetzung chemisch vernetzt werden kann. Dabei soll das Beschichtungsmittel nach der Vernetzung eine deckende, nicht durchsichtige Schicht ergeben. Diese Schicht soll eine Konsistenz haben, dass sie durch Reiben mit Fingernagel oder Gegenständen ähnlicher Härte von der darunter liegenden Schicht entfernt werden kann.

Die Aufgabe wird gelöst durch das Bereitstellen eines strahlenvernetzbaren pigmentierten Beschichtungsmittels bestehend aus 50 bis 90 Gew.-% (Meth)acrylatmonomeren und/oder (Meth)acrylatoligomeren, 5 bis 25 Gew.-% Initiatoren und Beschleunigern, 3 bis 15 Gew.-% Füllstoffen und Pigmenten ausgewählt aus Russ, Graphit, Metallbronzen, Me (II), (III) oder (IV) oxiden, sulfaten, phosphaten, sowie 0 bis 5 Gew.-% Additiven, wobei die Summe der Bestandteile 100 % betragen soll, dadurch gekennzeichnet, dass das Beschichtungsmittel keine organischen Lösemittel enthält, als Beschleuniger mindestens ein N-Vinylalkyl-Amin oder N-Vinyl-Alkylamid enthält und so pigmentiert oder gefärbt ist, dass eine vernetzte Schicht für sichtbares Licht und UV-Licht nicht durchsichtig ist.

Ein weiterer Gegenstand der Erfindung ist es, eine Mehrschicht- Beschichtung auf einem flexiblen Substrat bereit zu stellen, wobei eine sichtbare Information auf einem Substrat aufgebracht ist, diese Informationsschicht vollständig mit einer entfernbaren, deckenden Schicht überzogen ist Dabei soll diese Deckschicht durch einfaches Reiben von der Informationsschicht entfernt werden können. Ein weiterer Gegenstand der Erfindung ist ein Verfahren zum Herstellen einer Mehrschicht-Beschichtung.

Das erfindungsgemäße Beschichtungsmittel iststrahlenhärtbar. Als Strahlung kann es sich dabei um beliebige bekannte aktinische Strahlung handeln, beispielsweise um Elektronenstrahlen oder UV-Strahlen. Solche Strahlungsarten in den geeigneten Frequenzbereichen, geeignete Strahlungsquellen oder angepasste Applikationsverfahren sind dem Fachmann bekannt.

Das Beschichtungsmittel soll Polymere, Oligomere und/oder Monomere enthalten, die mindestens eine strahlenhärtbare, reaktive ungesättigte Doppelbindung aufweisen.

Ein Bestandteil des Beschichtungsmittels sind mono-, di- oder höherfunktionelle Acrylatoder Methacrylatester. Solche Acrylat- oder Methacrylatester umfassen beispielsweise Ester der Acrylsäure oder Methacrylsäure mit aromatischen, aliphatischen oder cycloaliphatischen Polyolen oder von Polyetheralkoholen.

Als monofunktioneller (Meth)Acrylatester können beispielsweise Ester der (Meth)acrylsäure mit einwertigen Alkoholen eingesetzt werden. Beispiele für geeignete Verbindungen sind (Meth)Acrylsäureester der aromatischen, cycloaliphatischen, aliphatischen, linearen oder verzweigten C₁ bis C₃₀ Monoalkohole oder von entsprechenden Etheralkoholen. Beispiele für solche Verbindungen sind Methyl(meth)acrylat, Ethyl(meth)acrylat, n-Butyl(meth)-acrylat, i-Butyl(meth)acrylat, t-Butyl(meth)acrylat, Pentyl(meth)acrylat, 2-Ethylhexyl(meth)-acrylat, Stearyl(meth)acrylat, Lauryl(meth)acrylat, Cyclohexyl(meth)acrylat, Isobornyl(meth)-acrylat; Aryl(meth)acrylate wie zum Beispiel Benzyl(meth)acrylat oder Phenyl(meth), Mono-(meth)acrylate von Ethern, Polyethylenglycolen, Polypropylenglycolen oder deren Mischungen mit 5-80 C-Atomen, wie beispielsweise Tetrahydrofurfurylmethacrylat, Methoxy-(m)ethoxyethylmethacrylat, 1-Butoxypropylmethacrylat, Cyclohexyloxymethylmethacrylat, Benzyloxymethyl-methacrylat, Furfurylmethacrylat, 2-Butoxyethylmethacrylat, 2-Ethoxyethyl-methacrylat, Allyloxymethylmethacrylat, 1-Ethoxybutylmethacrylat, 1-Ethoxyethyl-methacrylat, Ethoxymethylmethacrylat, Poly(ethylenglycol)methylether-(meth)acrylat und Poly-(propylenglycol)methylether(meth)acrylat .

Es können auch (Meth)acrylate eingesetzt werden, die zusätzlich eine OH-Gruppe aufweisen. Beispiel dafür sind 2-Hydroxyethyl(meth)acrylat, 2- oder 3- Hydroxypropyl(meth)acrylat, 6-Hydroxyhexyl(meth)acrylat, Polyethylenglykol(meth) acrylat, Polypropylenglykol(meth)-acrylat, Glycerinmono-(meth)acrylat, 1,3-Glycerindi(meth)acrylat, 3-Phenoxy-2-hydroxypropyl-(meth)acrylat oder 2-, 3-, oder 4- Hydroxybutyl-(meth)acrylat, 3-Hydroxypropyl-(meth)acrylamid sowie N-Hydroxyethyl(meth)acrylamid.

Neben den erwähnten (Meth)acrylaten können die zu Beschichtungsmittel auch weitere ungesättigte Monomere aufweisen, die mit den (Meth)acrylaten copolymerisierbar sind. Hierzu gehören unter anderem 1-Alkene, wie 1-Hexen, 1-Hepten, verzweigte Alkene wie beispielsweise Vinylcyclohexan, Vinylverbindungen, wie beispielsweise Vinylacetat, Styrol, substituierte Styrole mit einem Alkylsubstituenten an der Vinylgruppe, heterocyclische Verbindungen wie 2-Vinylpyridin, 3-Vinylpyridin, 2-Methyl-5-vinylpyridin, Vinylpyrimidin, Vinyloxolan oder Vinylfuran.

Als Polyole zur Herstellung von oligomeren multifunktionellen (Meth)acrylatestern (mit mehr als einer funktionellen Gruppe) können eine Vielzahl von Polyolen eingesetzt werden. Beispielsweise sind dies aliphatische Polyole mit 2-4 OH-Gruppen pro Molekül und 2 bis etwa 30 C-Atomen. Geeignete aliphatische Polyole sind beispielsweise Ethylenglykol, Propandiol-1,2 oder-1,3, Butandiol-1,4, Butandiol-1,3, Butandiol-2,3, Butendiol-1,4, Pentandiol-1,5, Pentendiole, Hexandiol-1,6, Octandiol-1,8, Dodecandiol und höhere Homologe, Isomere und Gemische solcher Verbindungen. Ebenfalls geeignet sind höherfunktionelle Alkohole wie beispielsweise Glycerin, Trimethylolpropan, Pentaerythrit oder Zuckeralkohole, wie Sorbit oder Glucose, sowie oligomere Ether oder Umsetzungsprodukte mit Ethylen- oder Propylenoxid.

Weiterhin können als Polyolkomponente zur Herstellung der oligomeren (Meth)acrylatester die Umsetzungsprodukte niedermolekularer, polyfunktioneller Alkohole mit Alkylenoxiden eingesetzt werden. Die Alkylenoxide weisen vorzugsweise zwei bis etwa vier C-Atome auf. Geeignet sind beispielsweise die Umsetzungsprodukte von Ethylenglykol, Propylenglykol, den isomeren Butandiolen oder Hexandiolen, Glycerin, Trimethylolethan oder Trimethylolpropan, Pentaerythrit mit Ethylenoxid, Propylenoxid oder Butylenoxid oder Gemischen davon.

Beispiele für solche höherfunktionellen (Meth)acrylatester sind Neopentylglykoldi(meth)-acrylat, 1,8-Octandioldi(meth)acrylat, Butandioldi(meth)acrylat, 1,6-Hexandioldi(meth)-acrylat, Trimethylolpropantri(meth)acrylat, Pentaerythrit-tetra(meth)acrylat, Dipentaerythritoltetra(meth)acrylat, Dipentaerytrhitolpenta(meth)acrylat, (Meth)acrylatester des Sorbits und anderer Zuckeralkohole, Ethylenoxid-modifizierte Neopentylglykoldi(meth)-acrylate, Propylenoxid-modifizierte Neopentylglykoldi(meth)acrylate, Ethylenoxid-modifizierte oder Propylenoxid-modifizierte 1,6-Hexandioldi(meth)acrylate, Polyethylenglykoldi(meth)acrylate, Polypropylenglykoldi(meth)acrylate Pentaerythritoltri(meth)acrylat, Dipentaerythritol-tetra(meth)acrylat oder Gemische davon.

Tri- und höherfunktionelle Acrylatmonomere umfassen beispielsweise auch Caprolactonmodifiziertes Dipentaerythritolhexa(meth)acrylat, Tris[(meth)acryloxyethyl] isocyanurat, Caprolacton-modifizierte Tris[(meth)acryloxyethyl]isocyanurate oder Gemische.

Besonders geeignet sind Umsetzungsprodukte auf Basis von Polyetherdiolen oder -triolen oder Polyalkylendiolen mit (Meth)acrylestern mit einem Molekulargewicht (Mn) von 200 bis 3000 g/mol , vorzugsweise von 300 bis 2000 g/mol, insbesondere bis etwa 1000 g/mol.

Weitere geeignete Oligomere sind Urethan(meth)acrylate. Es handelt sich dabei um Umsetzungsprodukte von Alkoholen, insbesondere Monoalkoholen, Diolen und/oder Triolen mit Di- oder Tri-Isocyanatverbindungen. Dabei werden die Mengenverhältnisse so gewählt, dass endständig NCO-funktionalisierte Prepolymere erhalten werden. Insbesondere sollen die Prepolymere linear sein, d.h. überwiegend aus Monoalkoholen oder Diolen und Diisocyanaten hergestellt werden. Eine zusätzliche Verwendung von geringen Anteilen an trifunktionellen Polyolen oder Isocyanaten ist möglich. Solche PU-Prepolymere können dann mit OH-reaktiven (Meth)acrylverbindungen zu den PU-(meth)acrylaten umgesetzt werden.

Es können die für Klebstoffanwendung bekannten monomeren Di- oder Triisocyanate eingesetzt werden. Beispiele für geeignete monomere Polyisocyanate sind 1,5-Naphthylendüsocyanat, 2,2'-, 2,4- und/oder 4,4'-Diphenylmethandüsocyanat (MDI), hydriertes MDI (H₁₂MDI), Xylylendiisocyanat (XDI), Tetramethylxylylendiisocyanat (TMXDI), 4,4'-Dibenzyldüsocyanat, 1,3-Phenylendiisocyanat, die Isomeren des Toluylendiisocyanats (TDI), 1-Methyl-2,4-diisocyanato-cyclohexan, 1,6-Diisocyanato-2,2,4-trimethylhexan, 1,6-Diisocyanato-2,4,4-trimethylhexan, 1-Isocyanatomethyl-3-isocyanato-1,5,5-trimethylcyclohexan (IPDI), Tetramethoxybutan-1,4-diisocyanat, Hexan-1,6-diisocyanat (HDI), Dicyclohexylmethandiisocyanat, Cyclohexan-1,4-diisocyanat, Ethylendiisocyanat, Trimethylhexamethylendiisocyanat, 1,4-Diisocyanatobutan, 1,12-Diisocyanatododecan, Dimerfettsäurediisocyanat.

Als Polyol zur Herstellung der PU-Prepolymere geeignet sind beispielsweise niedermolekulare Polymere ausgewählt aus Polyester-, Polyether-, Polycarbonat-, Polyacetalpolyolen, die terminale OH-Gruppen aufweisen, oder aliphatische oder aromatische 1- bis 3-wertige Alkohohole, mit einem Molekulargewicht (M_{N} ) von etwa 200 bis 5000 g/mol (zahlenmittleres Molekulargewicht, M_{N}, wie durch GPC bestimmbar).

Monofunktionelle Verbindungen zur Herstellung der Polyurethane sind beispielsweise aliphatische Alkohole mit 1 bis 30 C-Atomen, wie beispielsweise Ethanol, Propanol, Butanol, Hexanol, Octanol und höhere Homologe, sowie die entsprechenden Thioverbindungen. Es können auch aromatische Alkohole eingesetzt werden, beispielsweise Alkylphenole, wie Nonylphenol. Auch höherfunktionelle aliphatische Polyole sind geeignet, insbesondere Diole. Geeignete Verbindungen sind beispielsweise Polyole mit 2 bis 40 C-Atomen, beispielsweise Ethylenglycol, Propandiol, Butandiol und höhere Homologe.

Die zur Herstellung der PU-Prepolymer-Vorprodukte geeigneten Polyole sollen insbesondere ein Molekulargewicht kleiner 3000 g/mol besitzen. Im Falle von Polyetherpolyolen soll das Molekulargewicht zwischen 200 bis 2000 g/mol liegen, insbesondere zwischen 400 und 1000 g/mol. Im Falle von Polyesterpolyolen soll das Molekulargewicht bevorzugt kleiner 1500 g/mol betragen. Insbesondere geeignet sind lineare Polyetherpolyole.

Die Umsetzung der Polyole mit den Polyisocyanaten kann in bekannter Weise beispielsweise in Gegenwart von Lösemitteln erfolgen, bevorzugt wird jedoch in lösemittelfreier Form gearbeitet.

In einer weiteren Reaktion werden die NCO-Gruppen anschließend mit Verbindungen umgesetzt, die eine funktionelle Gruppe tragen, die mit Isocyanaten reagieren kann und als weitere funktionelle Gruppe eine durch radikalische Polymerisation vernetzbare Doppelbindung aufweist. Diese habe üblicherweise ein Molekulargewicht von weniger als 1000 g/mol, insbesondere unter 500 g/mol.

Beispiele für solche Verbindungen sind Ester von α-β-ungesättigten Carbonsäuren mit niedermolekularen insbesondere aliphatischen Alkoholen, die im Alkylrest noch eine weitere OH-Gruppe tragen. Entsprechende OH-Gruppen tragende Ester sind vorstehend bereits beschrieben.

Geeignete Oligomere oder Polymere, die strahlenhärtbare Gruppen aufweisen, sind dem Fachmann bekannt und kommerziell erhältlich, beispielsweise unter den Handelsnamen Photomer®, Laromer®, Craynor®, Genomer® oder Ebecryl®.

Bevorzugt sind die Mischungen der (Meth)acrylatmonomere oder -oligomere im Bereich von 15°C bis 100 °C, bevorzugt 20°C bis 80 °C, fließfähig.

Das erfindungsgemäße Beschichtungsmittel soll 50 bis 90 Gew.-% (bezogen auf das gesamte Beschichtungsmittel) an (Meth)acrylat-reaktiven Verbindungen enthalten, insbesondere 60 bis 85 Gew.-%. Um eine geeignete Viskosität zu erhalten, können Mischungen von monomeren Verbindungen, oligomeren (Meth)acrylaten und/oder polymeren (Meth)acrylaten eingesetzt werden.

Das erfindungsgemäße Beschichtungsmittel kann auch Photoinitiatoren enthalten. Insbesondere als UV-vernetzbares Beschichtungsmittel ist als notwendiger Bestandteil ein Photoinitiator enthalten. Dieser soll insbesondere bei Bestrahlung einer Wellenlänge von etwa 215 nm bis etwa 480 nm dazu in der Lage ist, eine radikalische Polymerisation olefinisch ungesättigter Doppelbindungen zu initiieren. Im Rahmen der vorliegenden Erfindung sind grundsätzlich alle handelsüblichen Photoinitiatoren geeignet.

Beispielsweise sind dieses alle Norrish-Type I fragmentierenden und Norrish -Typ II Substanzen. Solche Initiatoren sind dem Fachmann bekannt und können beispielsweise unter den Handelsnamen Irgacure®, Darocure®, Speedcure® erworben werden. Weiterhin geeignet sind beispielsweise Benzophenon, Thioxanthon, 2,4,6-Trimethylbenzoldiphenylphosphinoxid und entsprechende Derivate, der genannten Verbindungen. Die Initiatoren können einzeln oder im Gemisch eingesetzt werden. Die Menge der Initiatoren beträgt von 0,5 bis 10 Gew.-%, insbesondere 0,5 bis 5 Gew.-%.

Zusätzlich wird mindestens eine basische Verbindungen als Beschleuniger eingesetzt, die zusätzlich noch reaktive Doppelbindungen enthalten. Es handelt sich dabei um Verbindungen, die basische Aminogruppen enthalten und eine am N-Atom gebundene Vinyl-gruppe, wie N-Vinyl-Alkylamine oder N-Vinyl-Alkylamide. Die Alkylgruppe kann 1 bis 12 C-Atome aufweisen, sie kann linear, verzweigt, cyclisch oder aromatisch sein. Insbesondere handelt es sich um Dialkyamine, bevorzugt mit zwei gleichen Alkysubstituenten, auch cyclische Amine sind geeignet. Als Carbonsäuregruppe sind monobasische Carbonsäuren mit 2 bis 12 C-Atomen geeignet, beispielsweise lineare oder verzweigtem, cyclische oder aromatische Carbonsäuren. Insbesondere sind cyclische Amide geeignet. Beispiele für solche Verbindungen sind N-Vinyl-propylamin, N-Vinyl-butylamin,

N-Vinyl-hexylamin, N-Vinyl-isooctylamin, N-Vinyl-cyclohexylamin, N-Vinyl-diethylamin, N-Vinyl-dipropylamin, N-Vinyl-dibutylamin, N-Vinyl-methylcyclohexylamin, N-Vinylmethylbenzylamin, N-Vinyl-piperidin, N-Vinyl-pyrrolidin, N-Vinyl-acetamid, N-Vinylpropancarbonsäureamid, N-Vinyl-butancarbonsäureamid, N-Vinyl-hexancarbonsäureamid, N-Vinyl-pyrrolidon, N-Vinyl-caprolacton, N-Vinyl-benzoesäureamid, N-Vinyl-N-Methyl-acetamid, N-Vinyl-N-Ethyl-acetamid, N-Vinyl-N-Methyl-butancarbonsäureamid, N-Vinyl-N-Ethyl-butancarbonsäureamid oder N-Vinyl-N-Methyl-hexancarbonsäureamid. Dabei ist es möglich, dass diese Verbindungen im Netzwerk einpolymerisiert werden können. Es können auch Verbindungen eingesetzt werden, die mehr als eine N-Vinyl-Gruppe enthalten.

Die erfindungsgemäß notwendigen basischen Beschleuniger können einzeln oder im Gemisch vorliegen. Die Menge soll zwischen 0,1 bis 10 % betragen, insbesondere zwischen 0,2 bis 5 Gew.-%. Es ist bevorzugt, wenn die basischen Substanzen nur tertiäre Amino- oder Amidgruppen enthalten. In einer Ausführungsform werden solche basischen Substanzen eingesetzt, die nur eine geringe Migration im Klebstoff zeigen. Das kann beispielsweise durch polymere Amine erzielt werden oder durch einbeziehen in die radikalische Polymerisation.

Das erfindungsgemäße Beschichtungsmittel muss deckende Pigmente enthalten. Es handelt sich dabei um Pigmente, die bei einer entsprechend hohen Pigmentierung und einer entsprechenden Schichtdicke ein ausreichendes Deckvermögen zeigen. Ausreichendes Deckvermögen soll im Sinne dieser Erfindung bedeuten, dass die Beschichtung im vernetzen Zustand nicht durchsichtig für sichtbares Licht ist. Insbesondere soll die Erfindung nicht mit anderem hochenergetischen Licht, wie UV-Licht, durchsichtig sein. Ein sichtbares Druckbild auf der Substratoberfläche soll nicht durch eine erfindungsgemäße aufgetragene Beschichtung erkennbar sein, auch nicht im Seitenlicht, Gegenlicht oder anderen physikalischen Beleuchtungsmethoden.

Bei den erfindungsgemäß geeigneten Pigmenten handelt es sich bevorzugt um schichtförmige Pigmente. Hierbei handelt es sich beispielsweise um Tonerden, zum Beispiel Aluminiumoxide; Schichtsilikate wie beispielsweise Bentonit, Montmorillonit, Glimmer, Vermiculit oder deren Mischungen; Phyllosilikate, wie Magnesiumsilikat oder Alluminiumsilikat; Graphit. Insbesondere sind plättchenförmige Metalleffektpigmente geeignet, z. B. Metallbronzen aus Aluminium, Kupfer oder anderen Metallen. Es kann sich auch um deckende Effektpigmente handeln, wie z. B. metalloxidbeschichtete Metallpigmente, z. B. titandioxidbeschichtetes, eisenoxidbeschichtetes oder mischoxidbeschichtetes Aluminium, beschichteter Glimmer. Solche Pigmente sind kommerziell erhältlich. Sie können einzeln oder als Gemisch eingesetzt werden, oder sie werden mit Anteilen an farbgebenden organischen oder anorganischen Pigmenten eingesetzt.

Das erfindungsgemäße Beschichtungsmittel kann zusätzlich übliche Pigmente und Füllstoffe enthalten. Es handelt sich dabei beispielsweise um Oxide, Phosphate, Sulfate oder Carbonate des Aluminums, Siliciums, Zirkoniums, Titans, Zinks, Eisens, Mangan oder der (Erd)Alkalimetalle. Beispiel dafür sind Calciumcarbonat, Titandioxid, Zinkoxid, Eisenoxid, Magnesiumoxid, Aluminiumoxid, Bariumsulfat, Siliciumdioxid.

Die Menge der deckenden Pigmente soll zwischen 0,5 bis 30 Gew.-% betragen, insbesondere 3 bis 15 Gew.-%. Durch die Auswahl und Zusammenstellung der Pigmente ist es möglich, eine deckende Schicht aufzutragen, die bestimmte optische Eigenschaften aufweisen. Sie kann einerseits reflektierende Eigenschaften haben, sie kann gefärbt sein, sie kann Interferenzeigenschaften aufweisen. Jedoch ist in jeden Fall das Beschichtungsmittel so aufzutragen, dass eine deckende Beschichtung erhalten wird.

Das erfindungsgemäße Beschichtungsmittel kann weiterhin übliche Additive enthalten. Beispiele für solche Additive sind Thioxotropiemittel, Verlaufsmittel, Entschäumungsmittel, Stabilisatoren, Haftvermittler oder auch Weichmacher. Insbesondere soll das Überzugsmittel keine Lösemittel enthalten, dass heißt, dass der Lösemittelgehalt nur aus Verunreinigungen von angesetzten Rohmaterialien bestehen soll.

Verlaufsmittel sind dem Fachmann bekannt. Es handelt sich dabei beispielsweise um modifizierte Acrylpolymere oder um modifizierte Polysiloxane. Ebenso sind dem Fachmann Entschäumungsmittel bekannt. Es handelt sich dabei insbesondere um solche auf Basis von Polysiloxan oder Polyether. Als Weichmacher können die bekannten Weichmacher eingesetzt werden, solange sie mit den anderen Bestandteilen des Beschichtungsmittels verträglich sind. Es kann sich dabei beispielsweise um Ester handeln, mineralische Öle, Polybuten, Polyisopren, Polybutadien-Oligomere, paraffinische Kohlenwasserstoffe oder Polypropylen/Polybutylenglykole. Die Menge der Additive und Hilfsmittel soll zwischen 0 bis 15 % betragen, insbesondere weniger als 5 %.

Der erfindungsgemäße Beschichtungsmittel ist bei Raumtemperatur flüssig. Die Viskosität soll bei einer Temperatur zwischen 15 bis 40°C zwischen 200 bis 5.000 mPas betragen, insbesondere zwischen 300 bis 2.000 mPas (gemessen nach Brookfield , EN ISO 2555).

Das erfindungsgemäße Beschichtungsmittel weist eine Viskosität auf, so dass es mit normalen Druckwerken aufgetragen werden kann.

Unmittelbar nach dem Auftragen des Beschichtungsmittels wird dieses durch aktinische Strahlung vernetzt. Dabei kann es sich um Elektronenstrahlung handeln, bevorzugt ist jedoch UV-Strahlung, insbesondere UV-C-Strahlung. Dabei kann die Wellenlänge von 210 bis 480 nm betragen insbesondere bis 420nm. Die Wellenlänge kann dem Klebstoff und dem eingesetzten Initiator angepasst werden. Die Bestrahlung kann kontinuierlich erfolgen oder es wird eine Blitzlichtbestrahlung vorgenommen. Dabei kann die Bestrahlungszeit von 0,01 sek. bis zu 10 sek. betragen. Geräte und Verfahrensparameter zum Vernetzen von UV-aktiven Überzugsmitteln sind dem Fachmann bekannt und können passend ausgewählt werden. Die erfindungsgemäßen Beschichtungsmittel können einer Strahlenhärtung unterzogen werden, obwohl sie pigmentiert sind. Der Beschleuniger und die Initiatoren sind ausreichend dosiert, um auch auf der Unterseite der aufgetragenen Schicht eine Vernetzung sicherzustellen.

Das erfindungsgemäße Beschichtungsmittel kann in einer Schichtdicke von 20 bis 500 µm, insbesondere von 30 bis 300 µm, insbesondere mehr als 100 µm aufgetragen werden. Unmittelbar nach der Strahlenvernetzung ist die Beschichtung durchgehärtet und das Substrat kann weiter verarbeitet werden. Wenn eine Schicht nicht ausreichend deckend ist, ist es möglich, mehrere Schichten des Überzugsmittels nacheinander aufzutragen und zu vernetzen. Bevorzugt ist diese Schicht die äußere Schicht der Mehrschichtfolge. Zur Lagerung ist es also notwendig, dass die Schicht keine Klebstoffeigenschaften aufweist und eine nicht-klebrige Oberfläche nach Vernetzung bildet.

Ein weiterer Gegenstand der Erfindung ist ein Verfahren zum Herstellen eines Mehrschichtüberzuges, bestehend aus einem Trägermaterial, einer Informationsschicht, einer antiadhäsiven Schicht sowie einer deckenden Beschichtung, wobei die deckende Beschichtung durch Reiben von der unterliegenden Trennschicht entfernt werden kann.

Als Trägermaterial sind bekannte Substrate geeignet, diese können starr, fest oder flexibel sein. Beispiele für einsetzbare Substrate sind solche aus Metall, Glas, Papier, Karton oder Kunststoffen. Bevorzugt handelt es sich um flexible Substrate, beispielsweise aus Papier, Kunststofffolien, Metallfolien oder Verbundmaterialien. Es sind insbesondere thermoplastische Kunststoffe wie Polyethylen, Polypropylen, Polystyrol, Polyamide, Polyvinylchlorid, Polyester, Cellophan oder andere natürliche Polymere geeignet.

Die Form der Substrate kann in weiten Grenzen variieren. Es handelt sich beispielsweise um Verpackungsmittel, Etiketten, Umverpackungen, Druckgegenstände usw. Das Substrat kann beispielsweise auf einer Oberflächenseite eine Information enthalten. Es kann sich dabei um Bilder, Buchstaben- oder Zahlencodes, logos handeln. Diese können aufgedruckt sein, ebenso ist es möglich, dass sie eine gewisse Prägung aufweisen. Es muss aber sichergestellt sein, dass die Information von der anderen Seite des Substrates nicht erkennbar ist.

Als Trägermaterial sind insbesondere flexible Materialien geeignet. Die Materialien sollen eine Stärke aufweisen, dass sie beim Reiben nicht mechanisch zerstört werden. Häufig sind die Substratschichten dünn und flexibel, beispielsweise mit einer Dicke zwischen 10 bis 250 µm. Auf diesen Träger wird eine Informationsschicht aufgebracht, beispielsweise in Form von Buchstaben, Schriftzügen, Zahlen, Logos, Mustern, Figuren oder ähnlichem. Es ist bevorzugt, wenn diese Informationsschicht in einem Druckverfahren aufgebracht werden kann, gegebenenfalls ist es aber auch möglich, dass eine entsprechende Information durch Prägung aufgebracht wird. Die bevorzugte Ausführungsform als gedruckte Informationsschicht wird danach fixiert, d.h. sie wird getrocknet oder unterliegt einer chemischen Vernetzung. Auf diese Informationsschicht wird anschließend eine Trennschicht aufgebracht.

Diese Trennschicht deckt üblicherweise die gesamte Oberfläche des Druckbildes ab. Insbesondere ist es zweckmäßig, einen abgegrenzten Teil zusätzlich zu den Informationen vollständig mit dieser Trennschicht zu versehen. Insbesondere kann dieser Teil eine neutrale Form aufweisen, sodass keine Hinweise auf die später verdeckten Informationen gegeben werden. Diese Trennschicht soll aus einer durchsichtigen oder durchscheinenden anti-adhesive Beschichtung bestehen, beispielsweise einem Klarlack. Um ein schnelles Auftragsverfahren sicherzustellen, sind lösemittelhaltige oder lösemittelfreie strahlenvernetzbare Klarlacküberzugsmittel besonders bevorzugt. Eine andere Zusammensetzung als Trennschicht sind wasserbasierte Acrylatüberzugsmittel. Diese können auch im Druckverfahren schnell aufgetragen werden. Durch die Monomerzusammensetzung kann eine gute antiadhäsive Wirkung erhalten werden. Diese Lackschicht soll nach der Vernetzung bzw. der Trocknung gut auf dem Substrat haften, an der freien Oberfläche jedoch anti-adhesive Eigenschaften aufweisen. Das kann beispielsweise dadurch erreicht werden, dass Additive eingesetzt werden, die eine Haftung von weiteren Schichten erschweren. Solche Additive sind dem Fachmann bekannt. Es handelt sich dabei beispielsweise um Silikon-haltige Substanzen, mehrfach chlorierte oder fluorierte organische Verbindungen, unpolare Wachse oder Öle. Dieser Klarlack wird vor der weiteren Beschichtung in eine vernetzte Schicht überführt. Die anti-adhäsive Schicht ist klar oder opak, d.h. sie sind für sichtbares Licht durchlässig, dass man die darunter liegende Information erkennen kann. Solche Überzugsmittel sind dem Fachmann in vielen Ausführungen bekannt.

Auf diese Trennschicht wird ein erfindungsgemäßes fließfähiges, strahlenvernetzbares pigmentiertes Beschichtungsmittel als weitere äußere Sicht aufgebracht. Dabei ist es erfindungsgemäß notwendig, dass die deckende Schicht die Informationsschicht und die Trennschicht vollständig überdeckt. Diese Schicht soll deckend sein. Gegebenenfalls ist es möglich, mehrere gleichartige Beschichtungen nacheinander aufzutragen und durch aktinische Strahlung zu vernetzen.

Diese verschiedenen Beschichtungsmittel sollen insbesondere eine Viskosität aufweisen, dass sie in einem Druckwerk aufgetragen werden können. Wenn die Informationsschicht eine Prägestruktur aufweist, ist es notwendig, dass die Trennschicht nach der Vernetzung eine Schichtstärke aufweist, so dass die Informationsschicht gleichmäßig abgedeckt wird und die Information nicht mehr von der Oberfläche her als Struktur zu erkennen ist.

Die erfindungsgemäße Arbeitsweise soll eine schnelle Abfolge der Verfahrensschritte ermöglichen. Deswegen ist es bevorzugt, wenn die Informationsschicht mit einem Druckauftrag aufgebracht werden kann. Ebenso ist es bevorzugt, wenn die Trennschicht durch Druckwerke aufgebracht werden kann. Eine anschließende Vernetzung beider Beschichtungen kann einzeln oder gemeinsam bevorzugt durch aktinische Strahlung geschehen. Es ist aber auch möglich, dass durch Wärme, beispielsweise durch Heizluft oder IR-Bestrahlung die Trennschicht getrocknet und/oder vernetzt wird. Nach Trocknen und/oder Vernetzen der Trennschicht wird gemäß dem Verfahren das erfindungsgemäße Beschichtungsmittel aufgetragen. Das kann als Ein-Schicht-Auftrag mit anschließender Vernetzung durchgeführt werden, es ist jedoch möglich diese Schicht in mehreren Auftragsstufen aufzubringen. Diese Druckvorgänge kann der Fachmann mit bekannten Druckverfahren, z. B. mit Rasterwalzen, Glattwalzen, mit Flexodruck-Klischee oder Siebdruck durchführen. Besonders geeignet sind Rasterwalzen oder Flexodruck-Klischee-Auftrag. Dabei ist sicherzustellen, dass das Beschichtungsmittel eine geeignete Viskosität aufweist.

Ein weiterer Gegenstand der Erfindung ist ein Mehrschichtüberzug auf einem Trägermaterial. Dabei ist auf einem festen oder flexiblen Träger eine sichtbare Information aufgebracht, diese vollständig von einer durchsichtigen Trennschicht abgedeckt, worauf als weitere äußere Schicht ein Überzug aus einem erfindungsgemäßen Beschichtungsmittel vorhanden ist. Dabei ist es notwendig, dass die äußere, deckende Schicht die darunterliegenden vollständig abdeckt. Die äußere Schicht ist so weich oder als Schicht so kohäsiv, dass sie durch Reiben mit einem Fingernagel vom Untergrund entfernt werden kann. Die Trennschicht und die Deckschicht sollen so elastisch sein, dass sie insbesondere bei einem flexiblen Trägermaterial nicht spröde von der Oberfläche brechen, sondern sich mit dem Substrat verformen lassen. Die außen liegende Deckschicht ist nicht klebend. Solche beschichteten Trägermaterialien können auch gestapelt werden ohne zu verkleben.

Durch die erfindungsgemäße Arbeitsweise ist es möglich, Mehrschichtbeschichtungen zu erstellen, die schnell und ohne Belastung der Umwelt durch Lösemittel aufgetragen werden können. Durch die Auswahl der erfindungsgemäßen strahlenvernetzbaren Beschichtungsmittel ist es weiterhin möglich, dass die Beschichtung durch UV-Strahlung vernetzt, obwohl deckende Pigmente enthalten sind. Die entstehenden Mehrschichtbeschichtungen enthalten eine Informationsschicht, die dem Betrachter nicht weiter zugänglich sind. Erst durch Entfernen der deckenden äußeren Schicht durch Reiben mit leichtem Druck wird diese deckende Beschichtung entfernt. Danach kann die Information gelesen und erkannt werden.

Solche Beschichtungen sind beispielsweise geeignet, um als Originalitätsnachweis von Gegenständen zu dienen. Ein weiteres Anwendungsgebiet ist die Verwendung Losen, wobei neutrale Substrate bereitgestellt werden, die der Kunde erst nachher überprüfen kann. Dabei ist durch das Entfernen der äußeren deckenden Beschichtung sichergestellt, dass der Kunde sich von der Unversehrtheit des Gegenstandes bzw. der Information überzeugen kann.

### Beispiel 1:

| | | |
|---|---|---|
| Aluminiumpigmente (12%) RotoStar UV FP 60-41001 Silver | Acrylat-Oligomeren und -Monomeren dispergiert | 70,00 |
| Trimethylolpropantriacrylat | | 10,00 |
| Dipentaerythrito pentaacrylat | | 3,00 |
| isopropyl-9H-thioxanthen-9-one | Photoinitiator | 1,50 |
| Diphenyl(2,4,6-trimethylbenzoyl)phosphinoxid | Photoinitiator | 2,00 |
| Esacure 1001M | Photoinitiator | 2,00 |
| Benzophenon | Photoinitiator | 2,00 |
| 4-dimethylamino-ethyl-benzoate | Beschleuniger | 7,00 |
| Polysiloxan-basierter Benetzungsmittel (Perenol S58) | Entschäumer | 2,00 |
| Polysiloxan-basierter Entschäumer (Perenol E 14) | Entschäumer | 0,50 |

### Beispiel 2:

| | Bestandteiltyp | Prozentualer Gewichtsanteil |
|---|---|---|
| | | |
| RotoStar Aluminiumpigmente (12%) UV FP 60-41001 Silver | Acrylat-Oligomeren und -Monomeren dispergiert | 60,00 |
| Trimethylolpropantriacrylat | | 12,00 |
| Dipentaerythritol pentaacrylat | | 5,00 |
| TiO2 | Füllstoff | 5,00 |
| Penn Color Black UV 9B1260 | Farbstoff | 1,00 |
| isopropyl-9H-thioxanthen-9-one | Photoinitiator | 1,50 |
| Diphenyl(2,4,6-trimethylbenzoyl)phosphinoxid | Photoinitiator | 2,00 |
| Esacure 1001M | Photoinitiator | 2,00 |
| Benzophenon | Photoinitiator | 2,00 |
| 4-dimethylamino-ethyl-benzoate | Beschleuniger | 1,00 |
| 1-Vinyl-2-pyrrolidon | Beschleuniger | 6,00 |
| Polysiloxan-basierter Benetzungsmittel (Perenol S58 zum Beispiel) | Additiv | 2,00 |
| Polysiloxan-basierter Entschäumer (Perenol E 14 zum Beispiel) | Additiv | 0,50 |

Auf ein Substrat aus Karton (300 g/m²) wird ein Logo gedruckt, die Druckfarbe danach kurz getrocknet bei ca. 40°C. Danach wird ein Klarlack aus (Miracure EC 1770) auf Acrylatbasis aufgetragen und durch Bestrahlen vernetzt. Schichtdicke ca. 10 g/m².
Auf die Beschichtung wird ein Beschichtungsmittel nach Beispiel 1 oder 2 aufgetragen und durch UV-(240 - 420 nm, H-bulb Mitteldruck-Lampe) vernetzt. Schichtdicke 20 g/m². Die Schicht (B1) ist nicht vollständig vernetzt und beim Abkratzen im unterem Teil noch weich. Ein gleichmäßiges Freilegen der Trennschicht ist nicht möglich.
Die Schicht (B2) ist silberglänzend und undurchsichtig. Sie kann durch Kratzen mit den Fingernagel von der Trennschicht entfernt werden.

## Patentansprüche

1. Strahlenvernetzbares pigmentiertes Beschichtungsmittel bestehend aus 50 bis 90 Gew.-% (Meth)acrylatmonomere und/oder (Meth)acrylatoligomere,
5 bis 25 Gew.-% Initiatoren und Beschleuniger,
3 bis 15 Gew.-% Füllstoffe und Pigmente ausgewählt aus Russ, Graphit, Metallbronzen, Me (II), (III) oder (IV) oxiden, sulfaten, phosphaten
0 bis 5 Gew.-% Additive,
wobei die Summe der Bestandteile 100 % betragen soll, **dadurch gekennzeichnet,**
**dass** das Beschichtungsmittel keine organischen Lösemittel enthält, als Beschleuniger mindestens ein N-Vinylalkyl-Amin oder N-Vinylalkyl-Amid enthält und so pigmentiert oder gefärbt ist, dass eine vernetzte Schicht für sichtbares Licht und UV-Licht nicht durchsichtig ist.

2. Vernetzbares Beschichtungsmittel nach Anspruch 1, **dadurch gekennzeichnet, dass** als Pigmente solche in Form von Plättchen und mit Teilchengrößen unterhalb von 100 µm enthalten sind.

3. Vernetzbares Beschichtungsmittel nach Anspruch 2, **dadurch gekennzeichnet, dass** eine vernetzte Überzugsschicht von 20 µm Dicke im Strahlungsbereich von Licht (300 bis 700 nm) nicht durchsichtig ist.

4. Vernetzbares Beschichtungsmittel nach Anspruch 1 bis 3, **dadurch gekennzeichnet, dass** als N-Vinylalkyl-Amin 0,5 bis 20 Gew-% vinylaromatische tertiäre Amine oder - Amide enthalten sind, insbesondere cyclische N-Vinylamine oder cyclische N-Vinyl-Amide.

5. Vernetzbares Beschichtungsmittel nach einem der Ansprüche 1 bis 4, **dadurch gekennzeichnet, dass** eine Beschichtung mit UV-Strahlung aushärtbar ist, insbesondere mit einer Wellenlänge zwischen 100 bis 450 nm.

6. Vernetzbares Beschichtungsmittel nach einem der Ansprüche 1 bis 5, **dadurch gekennzeichnet, dass** die vernetzte Schicht mit einem Gegenstand einer Härte von Fingernägeln abreibbar ist.

7. Vernetzbares Beschichtungsmittel nach einem der Ansprüche 1 bis 6, **dadurch gekennzeichnet, dass** die Viskosität 200 bis 5000 mPas beträgt (EN ISO 2555, Temperatur 15 bis 40°C) und mit einem Druckwerk aufgetragen werden kann.

8. Mehrschichtüberzug bestehend aus einer Trägerschicht, einem Druckbild aus UVhärtbaren Druckfarben, einer antiadhäsiven Schicht sowie einer undurchsichtigen Beschichtung aus einem strahlungsvernetzten Beschichtungsmittel nach einem der Ansprüche 1-7.

9. Mehrschichtüberzug nach Anspruch 8, **dadurch gekennzeichnet, dass** die antiadhäsive Schicht aus einem Trennlack besteht und das strahlenhärtbare Beschichtungsmittel aus einem vernetzten Beschichtungsmittel nach Anspruch 1 besteht.

10. Mehrschichtüberzug nach einem der Ansprüche 8 bis 9, **dadurch gekennzeichnet, dass** die undurchsichtige Beschichtung nicht klebrig ist.

11. Mehrschichtüberzug nach einem der Ansprüche 8 bis 10, **dadurch gekennzeichnet, dass** das strahlenhärtbare Beschichtungsmittel eine Schichtdicke von 15 bis 200 µm aufweist, insbesondere bis 100 µm.

12. Verfahren zum Herstellen eines Mehrschichtüberzugs nach Anspruch 8, **dadurch gekennzeichnet, dass** auf eine mechanisch stabile Trägerschicht ein Druckbild erzeugt wird, auf dieses Druckbild ein Trennlack aufgebracht wird, anschließend ein Überzug mit einem Beschichtungsmittel nach Anspruch 1 bis 7 aufgetragen wird, wobei jede Schichten von dem Auftragen den nächsten Schicht vernetzt oder getrocknet wird.

13. Verfahren zum Herstellen eines Mehrschichtüberzugs nach Anspruch 12, **dadurch gekennzeichnet, dass** mindestens die äußere Schicht mit Strahlung vernetzt wird.

14. Verfahren zum Herstellen eines Mehrschichtüberzugs nach einem der Ansprüche 12 oder 13, **dadurch gekennzeichnet, dass** lösemittelfreie Druckfarben und/oder Überzugsmittel eingesetzt werden.

## Claims

1. Radiation-crosslinkable pigmented coating agent consisting of 50 to 90 wt % (meth)acrylate monomers and/or (meth)acrylate oligomers,
5 to 25 wt % initiators and accelerators,
3 to 15 wt % fillers and pigments selected from carbon black, graphite, metal bronzes, Me (II), (III) or (IV) oxides, sulfates, phosphates
0 to 5 wt % additives,
wherein the sum of the ingredients should be 100 %, **characterised in that** the coating agent does not comprise organic solvent, comprises an N-vinylalkylamine or N-vinylalkylamide as the accelerator and is pigmented or coloured such that a crosslinked layer is non-transparent to visible light and UV-light.

2. Crosslinkable coating agent according to claim 1, **characterised in that** pigments in the form of platelets and with particles sizes below 100 µm are comprised as the pigments.

3. Crosslinkable coating agent according to claim 2, **characterised in that** a 20 µm thick crosslinked topcoat layer is non-transparent in the electromagnetic radiation region of light (300 to 700 nm).

4. Crosslinkable coating agent according to claim 1 to 3, **characterised in that** 0.5 to 20 wt % vinylaromatic tertiary amines or vinylaromatic tertiary amides, particularly cyclic N-vinylamines or cyclic N-vinylamides, are comprised as the N-vinylalkylamine.

5. Crosslinkable coating agent according to one of the claims 1 to 4, **characterised in that** a coating is curable with UV-radiation, in particular with a wavelength between 100 to 450 nm.

6. Crosslinkable coating agent according to one of the claims 1 to 5, **characterised in that** the crosslinked layer is capable of being rubbed off with an object having a hardness of finger nails.

7. Crosslinkable coating agent according to one of the claims 1 to 6, **characterised in that** the viscosity is in the range 200 to 5000 mPas (EN ISO 2555, temperature 15 to 40 °C) and can be applied with a printing unit.

8. Multi-layer topcoat consisting of a backing layer, a printed image made of UV-curable printing inks, an anti-adhesive layer as well as a non-transparent coating agent made of a radiation-crosslinked coating agent according to one of the claims 1-7.

9. Multi-layer topcoat according to claim 8, **characterised in that** the anti-adhesive layer consists of a release lacquer and the radiation-curable coating agent consists of a crosslinked coating agent according to claim 1.

10. Multi-layer topcoat according to one of the claims 8 to 9, **characterised in that** the non-transparent coating is not sticky.

11. Multi-layer topcoat according to one of the claims 8 to 10, **characterised in that** the thickness of the radiation-curable coating agent layer is 15 to 200 µm, in particular up to 100 µm.

12. Process for manufacturing a multi-layer topcoat according to claim 8, **characterised in that** a printed image is produced on a mechanically stable backing layer, a release lacquer is deposited onto this printed image, then a topcoat with a coating agent according to claim 1 to 7 is applied, wherein each layer is crosslinked or dried before applying the next layer.

13. Process for manufacturing a multi-layer topcoat according to claim 12, **characterised in that** at least the external layer is crosslinked with UV radiation.

14. Process for manufacturing a multi-layer topcoat according to one of the claims 12 or 13, **characterised in that** solvent-free printing inks and/or coating agents are used.

## Revendications

1. Agent d'enduction pigmenté réticulable par exposition à un rayonnement, constitué par
50 à 90 % en poids de monomères de (méth)acrylate et/ou d'oligomères de (méth)acrylate ;
5 à 25 % en poids d'initiateurs et d'accélérateurs ;
3 à 15 % en poids de matières de charge et de pigments choisis parmi le noir de carbone, le graphite, le bronze métallique, des oxydes, des sulfates, des phosphates de métaux (II), (III) ou (IV) ;
de 0 à 5 % en poids d'additifs ;
la somme des constituants devant s'élever à 100 %, **caractérisé en ce que** l'agent d'enduction ne contient aucun solvant organique, contient à titre d'accélérateurs au moins une N-vinylalkyl-amine ou un N-vinylalkylamide et est pigmenté ou coloré de telle sorte qu'une couche réticulée n'est pas transparente à la lumière visible et à la lumière ultraviolette.

2. Agent d'enduction réticulable selon la revendication 1, **caractérisé en ce qu'**il contient, à titre de pigments, des pigments sous forme de paillettes dont les granulométries sont inférieures à 100 µm.

3. Agent d'enduction réticulable selon la revendication 2, **caractérisé en ce qu'**une couche de revêtement réticulé possédant une épaisseur de 20 µm n'est pas transparente dans la plage de rayonnement de la lumière (de 300 à 700 nm).

4. Agent d'enduction réticulable selon les revendications 1 à 3, **caractérisé en ce qu'**il contient à titre de N-vinylalkyl-amine, de 0,5 à 20 % en poids d'amines ou d'amides tertiaires vinylaromatiques, en particulier des N-vinylamines cycliques ou des N-vinylamides cycliques.

5. Agent d'enduction réticulable selon l'une quelconque des revendications 1 à 4, **caractérisé en ce qu'**une enduction est durcissable par exposition à un rayonnement ultraviolet, en particulier avec une longueur d'onde qui se situe entre 100 et 450 nm.

6. Agent d'enduction réticulable selon l'une quelconque des revendications 1 à 5, **caractérisé en ce que** la couche réticulée peut être éliminée en frottant avec un objet dont la dureté est égale à celle des ongles des doigts.

7. Agent d'enduction réticulable selon l'une quelconque des revendications 1 à 6, **caractérisé en ce que** la viscosité s'élève de 200 à 5000 mPa.s (norme EN ISO 2555, température de 15 à 40 °C) et **en ce qu'**il peut être appliqué avec un élément d'impression.

8. Revêtement multicouche constitué par une couche de support, une image imprimée obtenue à partir d'encres durcissables par exposition au rayonnement ultraviolet, une couche antiadhésive ainsi qu'un revêtement non transparent constitué d'un agent d'enduction réticulé par exposition à un rayonnement selon l'une quelconque des revendications 1 à 7.

9. Revêtement multicouche selon la revendication 8, **caractérisé en ce que** la couche antiadhésive est constituée d'un vernis de séparation et **en ce que** l'agent d'enduction durcissable par exposition à un rayonnement est constitué d'un agent d'enduction réticulé selon la revendication 1.

10. Revêtement multicouche selon l'une quelconque des revendications 8 à 9, **caractérisé en ce que** l'enduction non transparente n'est pas collante.

11. Revêtement multicouche selon l'une quelconque des revendications 8 à 10, **caractérisé en ce que** l'agent d'enduction durcissable par exposition à un rayonnement présente une épaisseur de couche de 15 à 200 µm, en particulier jusqu'à 100 µm.

12. Procédé pour la fabrication d'un revêtement multicouche selon la revendication 8, **caractérisé en ce qu'**on produit une image imprimée sur une couche de support mécaniquement stable ; on applique sur cette image imprimée un vernis de séparation ; on applique ensuite un revêtement avec un agent d'enduction selon les revendications 1 à 7, chacune des couches étant soumise, avant l'application de la couche suivante, à une réticulation ou à un séchage.

13. Procédé pour la fabrication d'un revêtement multicouche selon la revendication 12, **caractérisé en ce qu'**au moins la couche externe est réticulée par exposition à un rayonnement ultraviolet.

14. Procédé pour la fabrication d'un revêtement multicouche selon l'une quelconque des revendications 12 ou 13, **caractérisé en ce qu'**on met en oeuvre des encres d'impression et/ou des agents de revêtement exempts de solvants.
